Europäisches Patentamt

European Patent Office

Office européen des brevets

(19)

(11) Veröffentlichungsnummer: **0 297 612 B1**

(12) **EUROPÄISCHE PATENTSCHRIFT**

(45) Veröffentlichungstag der Patentschrift: **30.10.91**

(51) Int. Cl.⁵: **F16L 59/14**

(21) Anmeldenummer: **88110577.9**

(22) Anmeldetag: **01.07.88**

Die Akte enthält technische Angaben, die nach dem Eingang der Anmeldung eingereicht wurden und die nicht in dieser Patentschrift enthalten sind.

(54) **Dämmschlauch für Rohrleitungen.**

(30) Priorität: **01.07.87 DE 3721787**

(43) Veröffentlichungstag der Anmeldung:
**04.01.89 Patentblatt 89/01**

(45) Bekanntmachung des Hinweises auf die
Patenterteilung:
**30.10.91 Patentblatt 91/44**

(84) Benannte Vertragsstaaten:
**AT CH DE FR IT LI**

(56) Entgegenhaltungen:
**EP-A- 222 227**
**EP-A- 0 084 088**
**DE-A- 3 104 161**
**FR-A- 2 319 075**

**N.T.I.S. TECH NOTES**

**N.T.I.S. TECH NOTES, Nr. 10, Teil D, Oktober 1985, Seite 1181, Springfield, Virginia, USA, T.R. SONJU: "Foam insulation for cryogenic flowlines"* Der ganze Artikel**

(73) Patentinhaber: **E. Missel GmbH & Co.**
**Hortensienweg 2 und 21**
**W-7000 Stuttgart 50(DE)**

(72) Erfinder: **Schäfer, Wolfgang**
**Endersbacher Strasse 51**
**W-7000 Stuttgart 50(DE)**

(74) Vertreter: **Morgan, James G. et al**
**MANITZ, FINSTERWALD & ROTERMUND**
**Robert-Koch-Strasse 1**
**W-8000 München 22(DE)**

**Beschreibung**

Die Erfindung betrifft einen Dämmschlauch für Rohrleitungen, insbesondere für Kaltwasserleitungen, mit einer innenliegenden Schicht aus zumindest im wesentlichen geschlossenzelligem Schaumstoff sowie einer diese Schaumstoffschicht umschließenden dampfdichten Folie, und einer zwischen der dampfdichten Folie und einer Außenhülle angeordneten Pufferschicht, wobei die Dicke der innenliegenden Schaumstoffschicht derart gewählt ist, daß unter Berücksichtigung der Temperatur des in der jeweiligen Rohrleitung geführten Mediums und der Umgebungsbedingungen der Taupunkt jeweils auf einen Bereich außerhalb der dampfdichten Folie verlagert ist.

Ein derartiger Dämmschlauch ist aus der EP-A-222 227 bekannt.

Ein grundsätzliches Problem bei Dämmungen der angegebenen Art besteht darin, daß an der Rohroberfläche Tauwasserbildung auftritt und als Folge davon nicht nur Korrosionsschäden entstehen, sondern auch die Dämmeigenschaften des jeweiligen Dämmaterials aufgrund von Durchfeuchtung wesentlich verschlechtert werden.

Des weiteren ist es problematisch, daß sich innerhalb der Pufferschicht Tauwasser bilden kann, das dann beispielsweise über Stoßstellen in die innenliegende Schaumstoffschicht und somit direkt an die Rohrleitung gelangt.

Die wesentlichen Nachteile bekannter Dämmschläuche bestehen folglich darin, daß durch das in der Pufferschicht und in der Schaumstoffschicht gespeicherte Tauwasser die Dämmeigenschaften eines Dämmschlauches verschlechtert werden und die Korrosionsgefahr an der Rohrleitung erheblich vergrößert wird.

Aufgabe der Erfindung ist es, einen Dämmschlauch für Rohrleitungen unter Beibehaltung eines einfachen und wirtschaftlich zu fertigenden Aufbaus so auszubilden, daß auch bei wechselnden Umgebungsbedingungen und unterschiedlichen Medientemperaturen der unerwünschte Tauwasser-Speichereffekt verhindert wird, was zu einer Vermeidung der Beeinträchtigung der Dämmeigenschaften durch die Bildung von Tauwasser führt und die Entstehung von Korrosionsschäden an der Rohrleitung ausschließt.

Gelöst wird diese Aufgabe nach der Erfindung im wesentlichen dadurch, daß die Pufferschicht aus einem synthetischen zur Tauwasseraufnahme bestimmten Faservlies besteht.

Da die Pufferschicht also erfindungsgemäß aus einem synthetischen Faservlies besteht, kann das innerhalb der Pufferschicht entstehende Tauwasser problemlos zum tiefsten Punkt des Dämmschlauches abfließen und von dort aus abgeleitet werden.

Das in der Pufferschicht gespeicherte Tauwasser beeinträchtigt folglich die Dämmeigenschaften der innenliegenden Schaumstoffschicht nicht und ermöglicht eine Weiterleitung und temporäre Wiederabgabe des angefallenen Tauwassers ohne daß zu irgendeinem Zeitpunkt die Gefahr von Korrosionsschäden entstehen würde.

Diese Pufferschicht wirkt sich zusätzlich in einer Erhöhung der Gesamtfestigkeit des Dammschlauchs, insbesondere hinsichtlich einer Erhöhung der Reißfestigkeit des Dammschlauches vorteilhaft aus und schützt damit vor allem die die Dampfsperre darstellende, insbesondere aus einer Metallfolie bestehende Schicht äußerst wirksam.

Umgeben wird die Pufferschicht bevorzugt von einer gegebenenfalls gitterverstärkt ausgebildeten Außenhülle, welche aus einem Material besteht, das radial nach innen, d.h. in Richtung der Feuchtigkeits- bzw. Dampfsperre zumindest weitestgehend feuchtigkeitsundurchlässig ist, während es in umgekehrter Richtung praktisch atmungsaktiv, d.h. insbesondere feuchtigkeitsdurchlässig ist. Derartige Materialien sind bekannt und können in diesen Anwendungsfall besonders vorteilhaft eingesetzt werden.

Weitere vorteilhafte Ausgestaltungen der Erfindung sind in den Unteransprüchen angegeben.

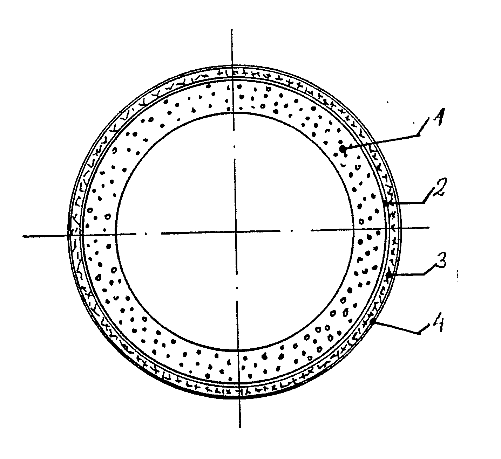

Ein Ausführungsbeispiel der Erfindung ist in der Zeichnung dargestellt, deren einzige Figur eine schematisierte Querschnittsdarstellung eines für Kaltwasserleitungen bestimmten Dämmschlauches nach der Erfindung zeigt.

Der passend auf ein Rohr aufziehbare Dämmschlauch besteht aus einer innenliegenden Schicht aus geschlossenzelligem Schaumstoff 1, welcher vollflächig mit einer eine Dampfsperre darstellenden Folie, insbesondere einer Metallfolie umgeben ist.

Die Dicke der Schaumstoffschicht 1 ist in Abhängigkeit vom jeweiligen Einsatzgebiet variabel und wird entsprechend den Umgebungsbedingungen und der jeweiligen Medientemperatur bestimmt.

Wenn als Dampfsperre eine Metallfolie verwendet wird, so sollte deren Mindestdicke etwa 0,05 mm vertragen. Bei anderen Folien ist die Dimensionierung derart zu wählen, daß sich eine zu derartigen Metallfolien diffusionsäquivalente Dicke ergibt.

Auf die Dampfsperrenschicht 2 folgt eine Pufferschicht 3, die aus synthetischen Fasern besteht, die in Form einer Wirrfaserschicht vorliegen.

Diese Pufferschicht 3 erfüllt eine Mehrfachfunktion dahingehend, daß sie einerseits zur Aufnahme des anfallenden Tauwassers dient andererseits eine Zwischenspeicherung, Weiterleitung und temporäre Wiederabgabe des Tauwassers gewährleistet und schließlich zu einer generellen Erhöhung der Reißfestigkeit des Dämmschlauches beiträgt und eine wirksame Schutzschicht für die gegebenenfalls empfindliche Dampfsperrenschicht bildet.

Die Pufferschicht 3 wird umschlossen von einer Außenhülle 4, die bevorzugt verstärkt ausgebildet ist und dazu mit einem Gittergewebe aus Kunststoffmaterial versehen sein kann oder ein integriertes Gittergewebe aufweist.

Bevorzugt wird als Material für die Außenhülle 4 ein solches Material gewählt, das eine weitestgehende Feuchtigkeitssperre in Richtung des Rohres, d.h. radial nach innen gewährleistet, jedoch in entgegengesetzter Richtung, d.h. zur Umgebung hin feuchtigkeitsdurchlässig ist und auf diese Weise die Abgabe des in der Pufferschicht anfallenden Tauwassers an die Umgebung sehr begünstigt.

## Patentansprüche

1. Dämmschlauch für Rohrleitungen, insbesondere für Kaltwasserleitungen, mit einer innenliegenden Schicht aus zumindest im wesentlichen geschlossenzelligem Schaumstoff sowie einer diese Schaumstoffschicht umschließenden dampfdichten Folie, und einer zwischen der dampfdichten Folie und einer Außenhülle angeordneten Pufferschicht, wobei die Dicke der innenliegenden Schaumstoffschicht derart gewählt ist, daß unter Berücksichtigung der Temperatur des in der jeweiligen Rohrleitung geführten Mediums und der Umgebungsbedingungen der Taupunkt jeweils auf einen Bereich außerhalb der dampfdichten Folie verlagert ist, dadurch **gekennzeichnet,** daß die Pufferschicht (3) aus einem synthetischen zur Tauwasseraufnahme bestimmten Faservlies besteht.

2. Dämmschlauch nach Anspruch 1, dadurch **gekennzeichnet,** daß die dampfdichte Folie (2) aus einer eine Mindestdikke von etwa 0,05 mm aufweisenden Metallfolie besteht.

3. Dämmschlauch nach einem oder mehreren der vorhergehenden Ansprüche, dadurch **gekennzeichnet,** daß die Außenhülle (4) aus einem Material besteht, das einen Feuchtigkeitsübergang von der Pufferschicht (3) zur Umgebung zuläßt, in entgegengesetzter Richtung jedoch eine Feuchtigkeitssperre bildet.

4. Dämmschlauch nach einem oder mehreren der vorhergehenden Ansprüche, dadurch **gekennzeichnet,** daß die Außenhülle (4) mit einem Gittergewebe versehen und / oder in diese Außenhülle ein verstärkendes Gittergewebe integriert ist.

5. Dämmschlauch nach einem oder mehreren der vorhergehenden Ansprüche, dadurch **gekennzeichnet,** daß die radiale Dicke der Pufferschicht (3) zumindest um den Faktor vier kleiner ist als die radiale Dicke der innenliegenden Schaumstoffschicht (1).

## Claims

1. Insulating hose for pipes, in particular for cold water pipes, comprising an inner layer of at least essentially closed cell foam material, a vapour-tight sheet enclosing this foam material layer, and a buffer layer arranged between the vapour-tight sheet and an outer sheath, the thickness of the inner foam material layer being selected such that, taking into account the temperature of the medium led in the respective pipe and the environmental conditions, the condensation point is displaced in each case to a region outside the vapour-tight sheet, characterised in that the buffer layer (3) comprises a synthetic fibre mat suitable for absorbing the condensed water.

2. Insulating hose in accordance with claim 1, characterised in that the vapour-tight sheet (2) comprises a metal sheet having a minimal thickness of 0,05 mm.

3. Insulating hose in accordance with any of the preceding claims, characterised in that the outer sheath (4) is made of a material which allows the passage of moisture from the buffer layer (3) to the environment, but forms a barrier to moisture in the opposite direction.

4. Insulating hose in accordance with any of the preceding claims, characterised in that the outer sheath (4) is provided with a grid fabric and/or a reinforcing grid fabric is integrated in this outer sheath.

5. Insulating hose in accordance with any of the preceding claims, characterised in that the radial thickness of the buffer layer (3) is smaller than the radial thickness of the inner foam material layer (1) by a factor of at least four.

## Revendications

1. Tube isolant pour conduits, en particulier pour conduits d'eau froide, comprenant une couche intérieure en matériau en mousse à cellules essentiellement fermées et une feuille étanche à la vapeur enfermant cette couche de matériau en mousse, et une couche tampon disposée entre la feuille étanche à la vapeur et une coque extérieure, l'épaisseur de la couche intérieure en mousse étant choisie de telle manière que, en tenant compte de la température du média véhiculé dans le conduit considéré et des conditions environnantes, le point de rosée est à chaque fois décalé dans une zone située en dehors de la feuille étanche à la vapeur, caractérisé en ce que la couche tampon (3) consiste en une nappe de fibres synthétiques propre à absorber l'eau condensée.

2. Tube isolant selon la revendication 1, caractérisé en ce que la feuille étanche à la vapeur (2) consiste en une feuille métallique ayant une épaisseur minimale d'environ 0,05 mm.

3. Tube isolant selon une ou plusieurs des revendications précédentes, caractérisé en ce que la coque extérieure (4) est réalisée en un matériau qui permet un passage de l'humidité depuis la couche tampon (3) vers l'environnement, mais forme une barrière contre l'humidité en direction opposée.

4. Tube isolant selon une ou plusieurs des revendications précédentes, caractérisé en ce que la coque extérieure (4) comporte une grille tissée et/ou en ce qu'une grille tissée de renfort est intégrée à cette coque extérieure.

5. Tube isolant selon une ou plusieurs des revendications précédentes, caractérisé en ce que l'épaisseur radiale de la couche tampon (3) est inférieure d'un facteur quatre au moins à l'épaisseur radiale de la couche intérieure en mousse (1).